# FASCICULE DE BREVET EUROPEEN

(11) **EP 3 887 201 B1**
(45) Date de publication et mention de la délivrance du brevet: **04.01.2023**
(21) Numéro de dépôt: 19801594.3
(22) Date de dépôt: 18.11.2019
(51) Int. Cl.: B60N 2/75, B60N 3/00, B60R 11/02

(54) **CONSOLE D'UN VÉHICULE AVEC SUPPORT ESCAMOTABLE**
FAHRZEUGKONSOLE MIT EINZIEHBARER STÜTZE
VEHICLE CONSOLE HAVING A RETRACTABLE SUPPORT

(30) Priorité: 30.11.2018 FR 1872124
(43) Date de publication de la demande: 06.10.2021
(73) Titulaire: Renault s.a.s, 92100 Boulogne Billancourt (FR)
(72) Inventeur: BEZEAULT, Loic, 78150 LE CHESNAY (FR); BRISSARD, Pierre, 78350 JOUY EN JOSAS (FR)
(74) Mandataire: Renault Group
(86) Numéro de dépôt international: PCT/EP2019/081612
(87) Numéro de publication internationale: WO 2020/109046

(56) Documents cités:
- GB-A- 2 420 328

## Description

L'invention a pour objet une console d'un véhicule, notamment d'un véhicule automobile, qui comprend un support pour objet escamotable.

Les véhicules notamment les véhicules automobiles sont maintenant couramment équipés d'au moins une console qui présente divers compartiments de rangement et/ou des supports d'objets, et le plus souvent au moins un accoudoir pouvant servir en même temps de couvercle à au moins un compartiment. La console est en effet en général installée dans l'habitacle du véhicule, entre deux sièges du véhicule, notamment entre les sièges avant, de sorte que les occupants des sièges bordant la console puissent bénéficier à la fois de l'accoudoir et disposer d'objets à portée de main.

Afin de ne pas encombrer l'habitacle, les supports d'objets sont prévus escamotables pour être rangés lorsqu'ils ne sont pas utilisés. Par exemple dans la demande de brevet européenne EP3063039 est proposé un aménagement de console présentant un support formant une table à partir d'éléments se déployant mécaniquement. Le document GB2420328 montre une console d'un véhicule automobile se présentant sous forme d'un bloc qui s'étend longitudinalement, verticalement et transversalement, comprenant au moins un logement avec une ouverture et au moins une surface d'appui apte à former un accoudoir configuré pour s'ouvrir et se fermer notamment par rapport audit logement, et un support escamotable se rangeant dans ledit logement et apte à se déployer dudit logement en une position d'usage, l'ouverture étant disposée adjacente à une extrémité dudit accoudoir.

Un des inconvénients de tels aménagements est la fragilité du support en position déployé notamment lors d'un appui forcé en bout de support qui peut engendrer une casse.

L'invention vise à résoudre au moins en partie cet inconvénient. Elle vise à proposer une console de véhicule comportant un support d'objet escamotable et qui soit notamment apte à recevoir un objet pouvant induire des efforts exercés sur ledit support comme un objet un peu lourd et/ou dont l'utilisation peut induire un appui forcé, par exemple un objet tel qu'une tablette électronique.

A cet effet, l'invention fournit une console d'un véhicule automobile se présentant sous forme d'un bloc qui s'étend longitudinalement, verticalement et transversalement, comprenant au moins un logement avec une ouverture et au moins une surface d'appui apte à former un accoudoir configuré pour s'ouvrir et se fermer notamment par rapport audit logement, et un support escamotable se rangeant dans ledit logement et apte à se déployer dudit logement en une position d'usage. Selon l'invention l'ouverture dudit logement est disposée adjacente à une extrémité dudit accoudoir, et que ledit support est configuré pour réversiblement se déployer de sa position escamotée dans ledit logement par extraction dudit logement, ledit accoudoir étant en position ouverte, vers une position d'usage sensiblement horizontale, dans le prolongement de ladite extrémité de l'accoudoir et suivant l'axe longitudinal dudit accoudoir, et de sorte qu'au moins ladite extrémité dudit accoudoir repose sur l'extrémité dudit support venant en prolongement dudit accoudoir quand ledit accoudoir est en position fermée sensiblement horizontale.

La présente invention permet ainsi, notamment que l'accoudoir forme un bras de levier en contre-appui dudit support en position d'usage, ledit support pouvant en outre être rangé dans son logement.

Plus particulièrement selon l'invention, l'ouverture dudit logement est adjacente à une extrémité de l'accoudoir et ledit logement s'étend verticalement à l'aplomb dudit accoudoir en position fermée, et ledit support est configuré pour réversiblement se déployer d'une position escamotée verticalement dans ledit logement par extraction dudit logement selon l'axe sensiblement vertical dudit logement, ledit accoudoir étant en une position ouverte sensiblement verticale, puis pivoter en son extrémité venant en prolongement dudit accoudoir quand ledit accoudoir est en position fermée sensiblement horizontale, ladite extrémité définissant une extrémité pivot, pour se rabattre jusqu'à venir dans une position d'usage horizontale, dans le prolongement de ladite extrémité de l'accoudoir et suivant l'axe longitudinal dudit accoudoir, et de sorte qu'au moins ladite extrémité dudit accoudoir repose sur au moins ladite extrémité pivot du support quand ledit accoudoir est en position fermée.

Avantageusement selon l'invention, ladite console comporte des moyens de guidage dudit support dans son logement qui comprennent au moins un axe pivot solidaire de ladite extrémité pivot dudit support, ledit au moins un axe pivot étant guidé en translation suivant des rainures dans ledit logement, et ledit au moins un axe pivot formant un axe transversal de pivotement dudit support entre sa dite position d'usage et une position intermédiaire sensiblement verticale prise en fin d'extraction dudit logement selon l'axe sensiblement vertical dudit logement. De préférence ladite console comprend deux axes pivots, respectivement solidaires latéralement du support.

De préférence selon l'invention, ladite console comprend en outre des éléments de soutien de l'accoudoir et sur lesquels peut reposer l'extrémité dudit accoudoir en prolongement de laquelle vient ledit support en position d'usage.

Avantageusement selon l'invention, ladite console comprend une zone de renforcement sur laquelle peut reposer l'extrémité dudit support en position d'usage venant en prolongement dudit accoudoir.

Selon un mode préféré de l'invention, ladite extrémité de l'accoudoir présente des moyens de verrouillage réversible en sa face inférieure coopérant avec des moyens complémentaires présents en l'extrémité dudit support qui est dans le prolongement dudit accoudoir en position fermée sensiblement horizontale quand ledit support est en position d'usage.

En particulier lesdits moyens de verrouillage réversible se présentent sous forme d'éléments s'encliquetant dans des moyens complémentaires sous forme d'un évidement.

Avantageusement selon l'invention, ledit support comprend au moins un aimant présent en sa face supérieure en sa position d'usage, et de préférence plusieurs aimants répartis en ladite face.

Alternativement ou en compléments desdits aimants, ledit support peut comprendre un revêtement anti-glisse.

L'invention a aussi pour objet un véhicule automobile comprenant une console telle que décrite précédemment.

Selon un mode préféré de l'invention, ladite console est configurée pour se disposer entre deux sièges dudit véhicule, en particulier entre les deux sièges avant du véhicule.

D'autres particularités et avantages de l'invention ressortiront à la lecture de la description faite ci-après d'un mode de réalisation de l'invention, à titre indicatif mais non limitatif, en référence aux figures annexées et pour lesquelles :
les figures 1 à 5 représentent une console d'un véhicule automobile intégrant un support escamotable selon l'invention, selon des vues en perspective de trois-quarts et latérale illustrant les différentes étapes de déploiement dudit support, et plus particulièrement :
[Fig. 1] représente la console dont ledit support est en position escamotée dans son logement;
[Fig. 2] représente la console dont ledit support est encore en position escamotée dans son logement; l'accoudoir fermant ledit logement étant en position ouverte
[Fig. 3] représente la console dont ledit support est en cours de déploiement, dans une position intermédiaire verticale en sortie de son logement ;
[Fig. 4] représente la console dont ledit support est en position déployée à l'horizontal ;
[Fig. 5] représente la console dont ledit support est en position déployée à l'horizontal, l'accoudoir étant en position rabattue;
[Fig. 6] illustre schématiquement en perspective depuis l'avant, une vue partielle et de dessous, de détail du support de la console illustrée aux figures précédentes, ledit support étant en position verticale ;
[Fig. 7] montre schématiquement en perspective depuis l'arrière et de dessus, une vue partielle, de détail de l'intérieur du logement du support de la console illustrée aux figures précédentes, sans le support ;
[Fig. 8A] illustre la console de la figure 5 suivant une vue partielle et en coupe longitudinale ;
[Fig. 8B] illustre schématiquement la configuration de la console de la figure 5 en lien avec la figure 8A.

Dans la suite de la description, il est fait référence à un repère XYZ, pour lequel X est la direction longitudinale avant-arrière du véhicule dans lequel peut s'installer la console, orientée vers l'arrière, Y est la direction transversale orientée vers la droite du véhicule, et Z est la direction verticale orientée vers le haut du véhicule. Les directions de la console correspondent ainsi aux directions du véhicule. Sauf précisions contraires, il en est de même pour les directions des éléments qui composent ladite console, notamment du support et de l'accoudoir qui vont être décrits. Les notions d'avant et d'arrière, d'inférieur ou de supérieur, relatives au support ou à l'accoudoir de la console qui va être décrite sont définies par rapport à ce support ou cet accoudoir en position d'usage à l'horizontal, et par référence à la console dans le véhicule.

Des références identiques pourront être utilisées d'une figure à l'autre pour désigner des éléments identiques ou similaires.

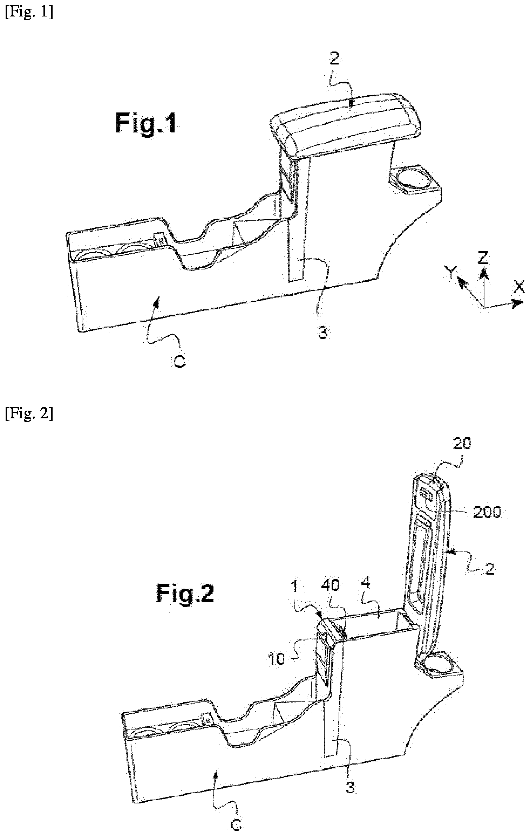

Les figures 1 à 5 illustrent, selon des vues en perspective de trois-quarts et latérales, une console C d'un véhicule automobile intégrant un support 1 suivant les différentes étapes de déploiement dudit support 1. Ladite console C intègre ledit support 1 qui est mobile et escamotable dans un logement 3 disposé sous la partie avant d'un accoudoir 2 apte à se fermer, selon l'exemple horizontalement, et à s'ouvrir, verticalement selon l'exemple.

Selon l'exemple non limitatif, ledit accoudoir 2 peut avantageusement former un couvercle au-dessus d'un compartiment 4 juxtaposé à l'arrière du logement 3 dudit support 1. Ledit accoudoir 2 a une forme sensiblement parallélépipédique dont la face supérieure forme une surface d'appui pour un passager.

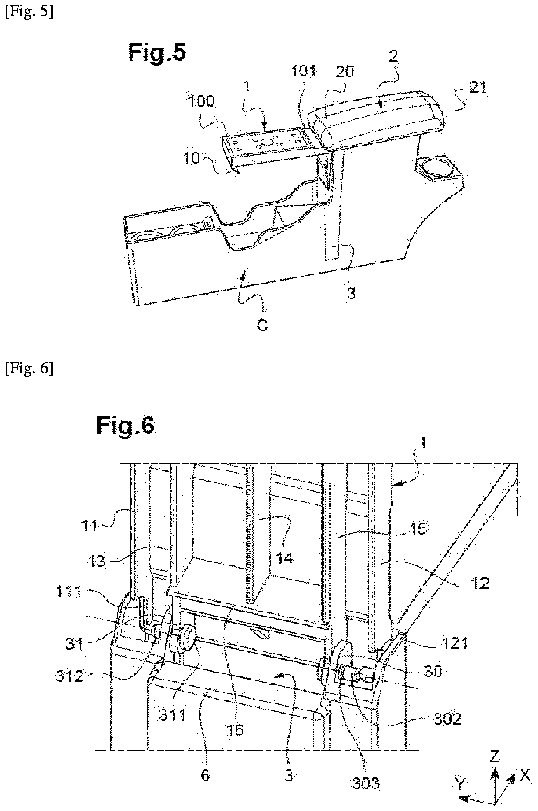

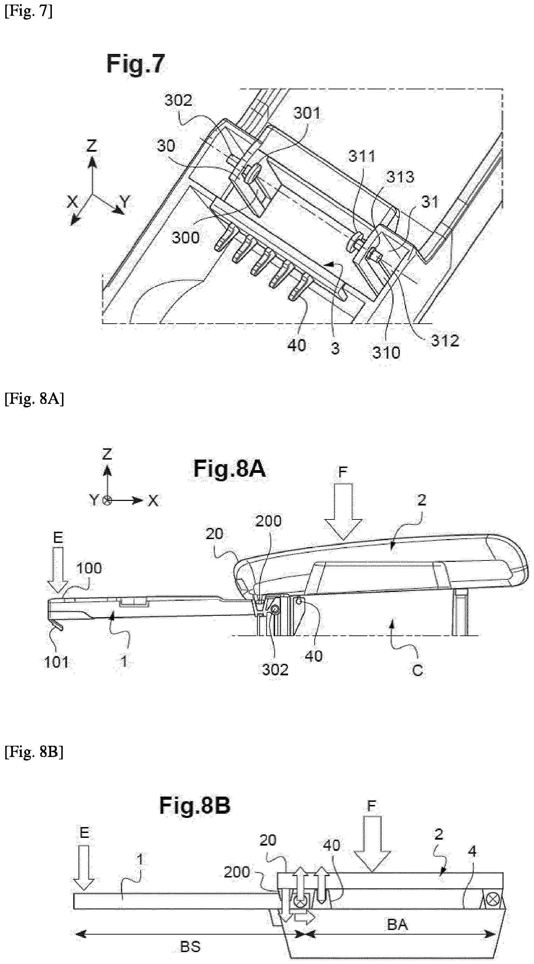

Ledit support 1 est formé selon l'exemple non limitatif par un plateau aménagé. Il comprend avantageusement une poignée de préhension 10 en son extrémité libre 100 que forme son extrémité avant. Son extrémité arrière 101 est solidaire de son logement 3 comme cela sera explicité en description des figures 6 et 7, et elle comprend en outre en sa face supérieure un évidement 110 récepteur d'un élément de verrouillage 200 porté par la face inférieure de l'accoudoir 2.

Ledit support 1 peut comprendre au moins un aimant, de préférence plusieurs aimants 50, 51, incrusté(s) et réparti(s) en sa face supérieure, le cas échéant de tailles différentes. Ces aimants permettent de maintenir des objets présentant des parties aimantables, en particulier des parties métalliques, notamment des objets portables avec écrans tels qu'un téléphone ou une tablette électronique. La répartition des aimants permet de disposer un objet dans différentes directions, en fonction de son utilisation, et aussi de maintenir l'objet malgré les vibrations ou mouvements subis par le support 1 lors du déplacement du véhicule.

La face supérieure dudit support 1 peut, alternativement ou en complément desdits aimants, présenter une surface anti-glisse, par exemple par apposition d'une couche ayant des propriétés anti-glisse, par exemple sous forme d'un film siliconé.

La vue selon la figure 1 illustre la console C dont ledit support 1 est rangé à la verticale (direction Z), dans son logement 3, c'est-à-dire en position escamotée, ledit accoudoir 2 de la console étant en position horizontale, soit en position fermée sur ledit logement 3, et également sur ledit compartiment 4 selon le cas particulier de l'exemple.

Pour déployer ledit support 1 depuis son logement 3, il faut en premier lieu dégager l'ouverture dudit logement en ouvrant l'accoudoir 2 dont l'extrémité avant 20 repose en débord sur l'extrémité avant 10 dudit support 1. Ledit accoudoir 2 est ouvert en soulevant son extrémité avant 20 et par pivotement vers l'arrière, suivant un axe transversal en son extrémité arrière 21, pour l'amener jusqu'en position verticale comme illustré en figure 2. On note qu'il est possible de soulever le support 1 même si l'accoudoir 2 n'est pas en position verticale, dès lors qu'un espace suffisant permet de le soulever.

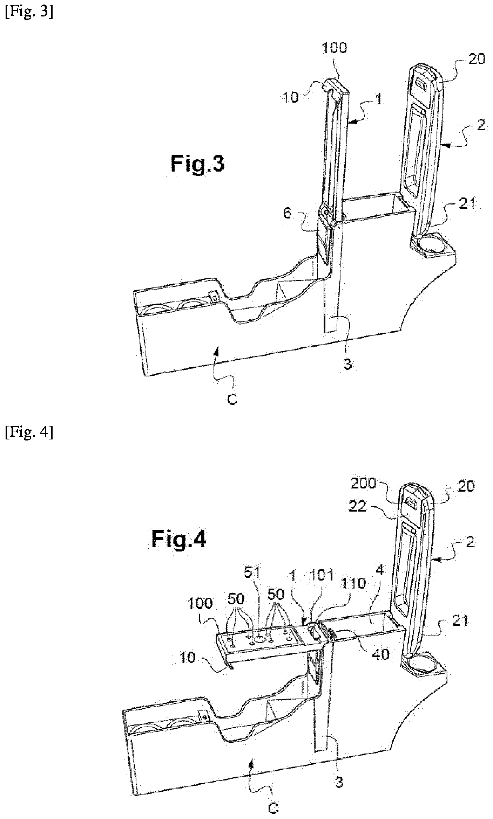

Dans une étape suivante, le support 1 est extrait de son logement 3 en le tirant à la verticale, et avantageusement à l'aide de sa poignée 10, par coulissement guidé dans ledit logement 3 pour l'amener dans un premier temps sorti de son logement 3 et maintenu en position verticale comme illustré en figure 3.

Dans une étape suivante, le support 1 est pivoté suivant un axe transversal en son extrémité arrière 101 pour le rabattre vers l'avant de la console et en position sensiblement horizontale, qui est sa position d'usage comme illustré en figure 4. En position d'usage ledit support 1 s'étend suivant son axe principal de direction longitudinale (direction X).

Dans une étape finalisant la mise en position d'usage du support 1, ledit accoudoir 2 de la console est pivoté, suivant un axe transversal en son extrémité arrière 21, pour le rabattre vers l'avant et en position sensiblement horizontale, dans le prolongement dudit support 1 en position horizontale et en recouvrant l'extrémité arrière 101 dudit support 1 comme illustré en figure 5. De préférence, la fermeture dudit accoudoir 2 est verrouillable, réversiblement, en l'extrémité arrière dudit support 1, par exemple grâce à l'élément de verrouillage 200, présent sur la face inférieure 22 de l'extrémité avant 20 dudit accoudoir, qui peut s'encliqueter dans l'évidement récepteur 110 creusé en partie arrière 101 dudit support 1. La fermeture verrouillée de l'accoudoir par-dessus l'extrémité arrière du support permet de créer un contre-appui lors de l'utilisation du support 1 comme cela sera explicité plus loin, notamment en description des figures 8A et 8B.

Pour ranger ledit support 1 dans son logement 3, on procède à l'inverse de ce qui a été décrit. On réouvre l'accoudoir 2 pour dégager l'extrémité arrière du support 1, puis on relève ledit support 1 à la verticale, par pivotement suivant un axe transversal vers l'arrière, puis on le fait coulisser verticalement dans son logement 3 et on rabat l'accoudoir 2 sur ledit logement 3 qui contient alors entièrement ledit support 1. Ledit support 1 est ainsi escamoté dans son logement 3, et il n'est alors plus visible.

Les figures 6 et 7 montrent des détails des moyens de mobilité du support 1, en figure 7 le support 1 n'étant pas représenté pour plus de clarté.

Le support 1 peut coulisser par guidage en translation verticale dans son logement 3 par l'intermédiaire de deux axes pivots latéraux 302, 312 guidés respectivement dans des rainures traversantes verticales 300, 310 présentes latéralement. Chacune de ces deux rainures 300, 310 est réalisée respectivement dans une paroi latérale 30, 31 rapportée dans le logement 3 dudit support. Lesdits axes pivots 302, 312 sont insérés respectivement dans des trous traversants latéraux, présents en partie arrière 101 du support et sous ledit support. Chaque dit axe pivot 302, 312 comprend une tête 301, 311 en une de ses extrémités pour retenir ledit axe audit support 1. Par ailleurs une rondelle 303, 313 permet de retenir ledit axe pivot dans sa rainure de guidage. Chaque axe pivot 302, 312 est ainsi solidarisé à la fois audit support 1 et à une rainure de guidage verticale 300, 310 du logement 3 dudit support. En outre lesdits axes pivots 302, 312 ainsi installés viennent, quand le support est sorti à la verticale de son logement 3, se positionner en partie supérieure de leur rainure de guidage respective, pour former des charnières en extrémité arrière 101 dudit support qui permettent de faire pivoter ledit support 1 de sa position verticale intermédiaire (figure 3)vers sa position horizontale d'usage (figures 4 ou 5).

Selon un mode de réalisation alternatif, non représenté, ledit support peut être rendu mobile par des moyens motorisés.

Il est important que ledit support 1 puisse tenir aux efforts lorsqu'il est en sa position d'usage, c'est-à-dire en position déployée à l'horizontale, afin de soutenir efficacement un objet un peu lourd, et/ou exerçant une force d'appui sur le support lors de son usage, notamment un objet tel qu'une tablette électronique.

Selon l'invention, cette résistance aux efforts est avantageusement répartie entre des moyens qui soutiennent ledit support par en-dessous et d'autres moyens qui viennent en contre-appui en formant un bras de levier.

Avantageusement, le support 1 comprend deux rebords latéraux longitudinaux 11, 12 qui s'étendent suivant sa face inférieure, et dont les extrémités arrières respectives présentent chacune un évidement 111, 121 (bien visibles sur la figure 6) permettant audit support en sa position horizontale d'usage de reposer en appui sur la partie supérieure de son logement 3, donc sur la console. De plus et de préférence, il présente un renfort transversal 16 venant en appui sur une zone de renforcement 6 prévue entre ledit support 1 et la base de la console, cette zone apparaissant en surépaisseur verticalement et extérieurement à l'avant de la paroi avant du logement 3 dudit support. Cet ensemble de configuration forme des moyens de soutien dudit support 1 en position d'usage.

Avantageusement selon l'invention, ledit support 1 peut comprendre d'autres éléments de renforts tels que des nervures de renfort 13, 14 ,15, en particulier longitudinales, s'étendant en sa face inférieure (figure 6).

En outre, comme le montrent les figures 8A et 8B, l'accoudoir 2, lorsqu'il est fermé, et qui plus est verrouillé par son élément de verrouillage 200, sur l'extrémité arrière 101 dans l'évidement récepteur 110 dudit support 1, forme un contre-appui (flèche F) lorsque des efforts (flèche E) sont exercés notamment en l'extrémité libre (extrémité avant 100) dudit support 1 déployé en position horizontale. En d'autres termes, ledit accoudoir 2 ainsi fermé forme un bras de levier BA contrecarrant le bras de levier BS que forme ledit support 1 ainsi déployé lorsque des efforts sont appliqués sur le support, notamment en son extrémité libre. En outre la partie inférieure dudit support, grâce à ses rebords longitudinaux 11, 12 avec évidements arrière 111, 121, vient en appui contre la paroi avant de son logement 3. Le renfort transversal 16 s'appuie sur l'élément 6 permettant un renforcement complémentaire pour contrer l'effort E et éviter un fléchissement du support 1. Ce bras de levier BA formé par l'accoudoir est d'autant efficace que lorsqu'un passager présent sur le siège bordant la console exerce une force de maintien (flèche F) est en appui (par exemple par son coude) sur ledit accoudoir. Ledit effet de levier de l'accoudoir est également d'autant plus efficace que la partie avant 20 dudit accoudoir est soutenue par appui sur la base de la console, en particulier grâce à des éléments de soutien 40 présents en partie supérieure du compartiment 4 sous ledit accoudoir, de préférence selon l'exemple non limitatif à l'arrière de la paroi arrière du logement 3 du support 1.

Grâce à l'élément de verrouillage 200, l'accoudoir maintient sous pression le support 1 sous l'effet de l'effort E (sans effort F, c'est-à-dire à vide). Il faut un effort important pour déverrouiller.

L'accoudoir décrit dans cet exemple non limitatif est articulé en sa partie arrière pour s'ouvrir plus ou moins à la verticale, toutefois d'autres types d'articulations peuvent être envisagées, par exemple l'accoudoir pourrait être articulé respectivement par rapport à un de ses bords longitudinaux (extérieurs) pour être apte à se soulever plus ou moins verticalement, l'important est que la partie avant de l'accoudoir puisse venir en appui sur l'extrémité arrière du support 1 lorsque ledit support et ledit accoudoir sont chacun en position horizontale, à condition que l'objet reste dans le cadre des revendications.

## Revendications

1. Console (C ) d'un véhicule automobile se présentant sous forme d'un bloc qui s'étend longitudinalement, verticalement et transversalement, comprenant au moins un logement (3) avec une ouverture et au moins une surface d'appui apte à former un accoudoir (2) configuré pour s'ouvrir et se fermer notamment par rapport audit logement, et un support escamotable (1) se rangeant dans ledit logement et apte à se déployer dudit logement en une position d'usage, **caractérisée en ce que** l'ouverture dudit logement (3) est disposée adjacente à une extrémité (20) dudit accoudoir (2), et que ledit support (1) est configuré pour réversiblement se déployer de sa position escamotée dans ledit logement par extraction dudit logement, ledit accoudoir étant en position ouverte, vers une position d'usage sensiblement horizontale, dans le prolongement de ladite extrémité (20) de l'accoudoir et suivant l'axe longitudinal dudit accoudoir, et de sorte qu'au moins ladite extrémité (20) dudit accoudoir repose sur l'extrémité (101) dudit support venant en prolongement dudit accoudoir quand ledit accoudoir est en position fermée sensiblement horizontale.

2. Console selon la revendication 1, **caractérisée en ce que** l'ouverture dudit logement est adjacente à une extrémité (20) de l'accoudoir (2) et que ledit logement (3) s'étend verticalement à l'aplomb dudit accoudoir en position fermée, et que ledit support (1) est configuré pour réversiblement se déployer d'une position escamotée verticalement dans ledit logement par extraction dudit logement selon l'axe sensiblement vertical dudit logement, ledit accoudoir étant en une position ouverte sensiblement verticale, puis pivoter en son extrémité (101) venant en prolongement dudit accoudoir quand ledit accoudoir est en position fermée sensiblement horizontale, ladite extrémité (101) définissant une extrémité pivot, pour se rabattre jusqu'à venir dans une position d'usage horizontale, dans le prolongement de ladite extrémité de l'accoudoir et suivant l'axe longitudinal dudit accoudoir, et de sorte qu'au moins ladite extrémité dudit accoudoir repose sur au moins ladite extrémité pivot du support quand ledit accoudoir est en position fermée.

3. Console selon la revendication 2, **caractérisée en ce qu'**elle comporte des moyens de guidage dudit support dans son logement (3) comprenant au moins un axe pivot (30, 31) solidaire de ladite extrémité pivot (101) dudit support (1), ledit au moins un axe pivot étant guidé en translation suivant des rainures (300, 310) dans ledit logement (3), et ledit au moins un axe pivot formant un axe transversal de pivotement dudit support entre sa dite position d'usage et une position intermédiaire sensiblement verticale prise en fin d'extraction dudit logement selon l'axe sensiblement vertical dudit logement.

4. Console selon l'une des revendications 1 à 3, **caractérisée en ce que** ladite console comprend des éléments de soutien (40) de l'accoudoir (2) et sur lesquels peut reposer l'extrémité (20) dudit accoudoir en prolongement de laquelle vient ledit support (1) en position d'usage.

5. Console selon l'une des revendications 1 à 4, **caractérisée en ce que** ladite console comprend une zone de renforcement (6) sur laquelle peut reposer l'extrémité dudit support (1) en position d'usage venant en prolongement dudit accoudoir.

6. Console selon l'une des revendications 1 à 5, **caractérisée en ce que** ladite extrémité (20) de l'accoudoir présente des moyens de verrouillage réversible (200) en sa face inférieure (22) coopérant avec des moyens complémentaires (110) présents en l'extrémité (101) dudit support (1) qui est dans le prolongement dudit accoudoir en position fermée sensiblement horizontale quand ledit support est en position d'usage.

7. Console selon la revendication 6, **caractérisée en ce que** lesdits moyens de verrouillage réversible (200) se présentent sous forme d'éléments (200) s'encliquetant dans des moyens complémentaires (110) sous forme d'un évidement.

8. Console selon l'une des revendications 1 à 7, **caractérisée en ce que** ledit support comprend au moins un aimant (50, 51) présent en sa face supérieure en sa position d'usage, et de préférence plusieurs aimants répartis en ladite face.

9. Console selon l'une des revendications 1 à 8, **caractérisée en ce que** ledit support comprend un revêtement anti-glisse.

10. Véhicule automobile comprenant une console (C), **caractérisé en ce que** ladite console est définie selon l'une des revendications 1 à 9, et de préférence ladite console étant configurée pour se disposer entre deux sièges dudit véhicule, en particulier entre deux sièges avant du véhicule.

## Patentansprüche

1. Konsole (C) eines Kraftfahrzeugs in Form eines Blocks, der sich längs, vertikal und quer erstreckt, umfassend wenigstens einen Aufnahmeraum (3) mit einer Öffnung und wenigstens eine Auflagefläche, die geeignet ist, eine Armlehne (2) zu bilden, die dazu ausgebildet ist, sich insbesondere in Bezug auf den Aufnahmeraum zu öffnen und zu schließen, und eine einziehbare Stütze (1), die in dem Aufnahmeraum verstaut wird und geeignet ist, aus dem Aufnahmeraum in eine Verwendungsposition auszufahren, **dadurch gekennzeichnet, dass** die Öffnung des Aufnahmeraumes (3) einem Ende (20) der Armlehne (2) benachbart angeordnet ist und dass die Stütze (1) dazu ausgebildet ist, umkehrbar aus ihrer eingezogenen Position im Aufnahmeraum durch Herausziehen aus dem Aufnahmeraum, wenn sich die Armlehne in einer geöffneten Position befindet, in eine im Wesentlichen horizontale Verwendungsposition in der Verlängerung des Endes (20) der Armlehne und entlang der Längsachse der Armlehne auszufahren, und derart, dass wenigstens das Ende (20) der Armlehne auf dem Ende (101) der in der Verlängerung der Armlehne befindlichen Stütze ruht, wenn sich die Armlehne in einer im Wesentlichen horizontalen geschlossenen Position befindet.

2. Konsole nach Anspruch 1, **dadurch gekennzeichnet, dass** die Öffnung des Aufnahmeraumes einem Ende (20) der Armlehne (2) benachbart ist und dass sich der Aufnahmeraum (3) von der Armlehne in der geschlossenen Position aus vertikal nach unten erstreckt und dass die Stütze (1) dazu ausgebildet ist, umkehrbar aus einer vertikal eingezogenen Position im Aufnahmeraum durch Herausziehen aus dem Aufnahmeraum entlang der im Wesentlichen vertikalen Achse des Aufnahmeraumes auszufahren, wenn sich die Armlehne in einer im Wesentlichen vertikalen geöffneten Position befindet, und dann an ihrem Ende (101) zu schwenken, das sich in der Verlängerung der Armlehne befindet, wenn sich die Armlehne in einer im Wesentlichen horizontalen geschlossenen Position befindet, wobei das Ende (101) ein Schwenkende definiert, um herunterzuklappen, bis sie in eine horizontale Verwendungsposition in der Verlängerung des Endes der Armlehne und entlang der Längsachse der Armlehne gelangt, und derart, dass wenigstens dieses Ende der Armlehne auf wenigstens der Schwenkende der Stütze ruht, wenn sich die Armlehne in einer geschlossenen Position befindet.

3. Konsole nach Anspruch 2, **dadurch gekennzeichnet, dass** sie Mittel zur Führung der Stütze in ihrer Aufnahme (3) aufweist, die wenigstens eine Schwenkachse (30, 31) umfassen, die mit dem Schwenkende (101) der Stütze (1) fest verbunden ist, wobei die wenigstens eine Schwenkachse entlang von Nuten (300, 310) im Aufnahmeraum (3) translatorisch geführt wird und die wenigstens eine Schwenkachse eine quer verlaufende Achse zur Schwenkung der Stütze zwischen ihrer besagten Verwendungsposition und einer im Wesentlichen vertikalen Zwischenposition, die am Ende des Herausziehens aus dem Aufnahmeraum entlang der im Wesentlichen vertikalen Achse des Aufnahmeraumes eingenommen wird, bildet.

4. Konsole nach einem der Ansprüche 1 bis 3, **dadurch gekennzeichnet, dass** die Konsole Abstützelemente (40) für die Armlehne (2) umfasst, auf denen das Ende (20) der Armlehne ruhen kann, in dessen Verlängerung sich die Stütze (1) in der Verwendungsposition befindet.

5. Konsole nach einem der Ansprüche 1 bis 4, **dadurch gekennzeichnet, dass** die Konsole einen Verstärkungsbereich (6) umfasst, auf dem das Ende der Stütze (1) in der Verwendungsposition, das sich in der Verlängerung der Armlehne befindet, ruhen kann.

6. Konsole nach einem der Ansprüche 1 bis 5, **dadurch gekennzeichnet, dass** das Ende (20) der Armlehne Mittel zur umkehrbaren Verriegelung (200) an seiner Unterseite (22) aufweist, die mit komplementären Mitteln (110) zusammenwirken, die an dem Ende (101) der Stütze (1) vorhanden sind, das sich in der Verlängerung der Armlehne in der im Wesentlichen horizontalen geschlossenen Position befindet, wenn sich die Stütze in der Verwendungsposition befindet.

7. Konsole nach Anspruch 6, **dadurch gekennzeichnet, dass** die Mittel zur umkehrbaren Verriegelung (200) die Form von Elementen (200) aufweisen, die in komplementäre Mittel (110) in der Form einer Aussparung einrasten.

8. Konsole nach einem der Ansprüche 1 bis 7, **dadurch gekennzeichnet, dass** die Stütze mindestens einen Magneten (50, 51), der in ihrer Verwendungsposition an ihrer Oberseite vorhanden ist, und vorzugsweise mehrere Magnete, die über diese Seite verteilt sind, umfasst.

9. Konsole nach einem der Ansprüche 1 bis 8, **dadurch gekennzeichnet, dass** die Stütze eine Antirutschbeschichtung umfasst.

10. Kraftfahrzeug, welches eine Konsole (C) umfasst, **dadurch gekennzeichnet, dass** die Konsole gemäß einem der Ansprüche 1 bis 9 definiert ist, und wobei die Konsole vorzugsweise dazu ausgebildet ist, zwischen zwei Sitzen des Fahrzeugs angeordnet zu werden, insbesondere zwischen zwei Vordersitzen des Fahrzeugs.

## Claims

1. Console (C) of a motor vehicle in the form of a block which extends longitudinally, vertically and transversely, comprising at least one housing (3) with an opening and at least one bearing surface that can form an armrest (2) configured to be opened and closed notably with respect to said housing, and a retractable support (1) that is stowed away in said housing and that can be deployed from said housing into a position of use, **characterized in that** the opening of said housing (3) is disposed adjacent to an end (20) of said armrest (2), and that said support (1) is configured to be reversibly deployed from its retracted position in said housing by extraction from said housing, said armrest being in open position, to a substantially horizontal position of use, in the extension of said end (20) of the armrest and along the longitudinal axis of said armrest, and such that at least said end (20) of said armrest rests on the end (101) of said support coming into extension of said armrest when said armrest is in substantially horizontal closed position.

2. Console according to Claim 1, **characterized in that** the opening of said housing is adjacent to an end (20) of the armrest (2) and that said housing (3) extends vertically plumb with said armrest in closed position, and that said support (1) is configured to be reversibly deployed from a vertically retracted position in said housing by extraction from said housing along the substantially vertical axis of said housing, said armrest being in a substantially vertical open position, then pivot at its end (101) coming into extension of said armrest when said armrest is in substantially horizontal closed position, said end (101) defining a pivot end, to be folded down to come into a horizontal position of use, in the extension of said end of the armrest and along the longitudinal axis of said armrest, and such that at least said end of said armrest rests on at least said pivot end of the support when said armrest is in closed position.

3. Console according to Claim 2, **characterized in that** it comprises means for guiding said support in its housing (3) comprising at least one pivot axis (30, 31) secured to said pivot end (101) of said support (1), said at least one pivot axis being guided in translation along grooves (300, 310) in said housing (3), and said at least one pivot axis forming a transverse pivoting axis of said support between its said position of use and a substantially vertical intermediate position assumed at the end of extraction from said housing along the substantially vertical axis of said housing.

4. Console according to one of Claims 1 to 3, **characterized in that** said console comprises supporting elements (40) for the armrest (2) and on which the end (20) of said armrest, into extension of which said support (1) comes in position of use, can rest.

5. Console according to one of Claims 1 to 4, **characterized in that** said console comprises a reinforcement zone (6) on which the end of said support (1) can rest in position of use coming into extension of said armrest.

6. Console according to one of Claims 1 to 5, **characterized in that** said end (20) of the armrest has reversible locking means (200) in its bottom face (22) cooperating with complementary means (110) present in the end (101) of said support (1) which is in the extension of said armrest in substantially horizontal closed position when said support is in position of use.

7. Console according to Claim 6, **characterized in that** said reversible locking means (200) take the form of elements (200) that snap-fit into complementary means (110) in the form of a recess.

8. Console according to one of Claims 1 to 7, **characterized in that** said support comprises at least one magnet (50, 51) present in its top face in its position of use, and preferably several magnets distributed in said face.

9. Console according to one of Claims 1 to 8, **characterized in that** said support comprises an anti-slip coating.

10. Motor vehicle comprising a console (C), **characterized in that** said console is defined according to one of Claims 1 to 9, and preferably said console being configured to be disposed between two seats of said vehicle, in particular between two front seats of the vehicle.
